# EUROPEAN PATENT SPECIFICATION

(11) **EP 0 360 567 B1**
(45) Date of publication and mention of the grant of the patent: **30.07.1997**
(21) Application number: 89309533.1
(22) Date of filing: 19.09.1989
(51) Int. Cl.: C04B 35/56, C04B 35/64, C04B 35/58

(54) **High hardness, wear resistant materials**
Hochfeste abriebsbeständige Materialien
Matériaux ayant une dureté élevée et une résistance à l'abrasion

(30) Priority: 20.09.1988 US 247054
(43) Date of publication of application: 28.03.1990
(73) Proprietor: THE DOW CHEMICAL COMPANY, Midland, Michigan 48640 (US)
(72) Inventor: Dubensky, Ellen M., Traverse City Michigan 49684 (US); Timm, Edward E., Traverse City Michigan 49684 (US)
(74) Representative: Burford, Anthony Frederick

(56) References cited:
- WO-A-79/00089
- US-A- 2 081 049
- US-A- 2 196 009
- US-A- 3 535 132
- CHEMICAL ABSTRACTS, vol. 108, no. 12, 21st March 1988, abstract no. 99546r, Columbus, Ohio, US; & JP-A-62 211 340
- Planseeberichte für Pulvermetallurgie 4 (1956), pages 2-6

## Description

This invention generally concerns a material prepared from an incomplete reaction of a mixture of a boron, carbon, nitrogen or silicon derivative of a first metal, a source of a second metal and, optionally, boron, carbon, nitrogen or silicon. This invention particularly concerns a material prepared from an incomplete reaction between tungsten carbide (WC) as the derivative of the first metal and molybdenum subcarbide (Mo₂C) as the source of the second metal. This invention further concerns wear resistant articles formed from such materials.

Tungsten carbide cemented with cobalt is a material of widely known utility for use in cutting tools and in other applications requiring high hardness. For example, tungsten carbide/cobalt is used in abrasive waterjet cutting nozzles. Unfortunately, cobalt is a strategic material. As such, its price and availability can be subject to political factors. These considerations, among others, provide a basis for many long standing programs aimed at finding replacements for tungsten carbide/cobalt.

WO-A-7900089 discloses the preparation of extra hard material based on a metal carbide of hexagonal crystal structure having the formula MoₓW₁₋ₓC, wherein x is between 0.01 and 1 by heating at least one compound or at least one solid solution of Mo and W (in which the total amount of Ni, Co and Fe does not exceed 0.1%) with carbon or a carbon-containing gas. The heating is at a temperature between 1000°C and a temperature (Tₓ) lower than the maximum temperature limit of the domain of stability of the MoₓW₁₋ₓC phase with Tₓ being 2700-1375x°C when x is 0.01 to 0.8 and 3400-2250x°C when x is 0.8 to 1. The reaction proceeds to completion to provide a product of fixed stoichiometry and no pressure is applied during the heating. It is an essential feature of the process that Mo and W are in the same phase in the reactant mixture.

It is stated in WO-A-7900089 that a mixture of the solid solution of the desired monocarbide of crude formula (Mo,W)C with the lower carbide of formula (Mo,W)₂C and only traces of free carbon can be obtained by heating the starting Mo-W alloy with an amount of carbon between the stoichiometric quantities corresponding to (Mo,W)C and (Mo,W)₂C at temperatures not exceeding the specified maxima (supra).

WO-A-7900089 acknowledges Albert et al (Planseeberichte für Pulvermetallurgie 4 (1956), p. 2-6) which discloses that the system obtained at 1710°C from Mo,W and C can have separate phases of (Mo,W)₂C and WC or separate phases of (Mo,W)₂C, WC and MoC. The acknowledgement in WO-A-7900089 refers to the use of Mo₂C instead of Mo and of WC instead of W but indicates that the same phase diagram applies.

In a comparative experiment reported in WO-A-7900089, a pelletized intimate mixture of very finely ground powders of Mo,W and C in amounts corresponding to the formula (Mo,W)₂C with 10% excess C was heated in a graphite container for 4 hours at 1600°C under hydrogen to provide a product having a first carbide phase of (Mo,W)₂C and a second carbide phase of the WC type.

It would be desirable to have one or more nonstrategic materials which would provide improvements in terms of hardness over tungsten carbide/cobalt, but at a lower cost than diamond. It would also be desirable to have a process which allowed production of complex, near net shapes which cannot be made by casting molten carbides or by hot pressing.

In one aspect, the present invention is a method of preparing a material suitable for use in fabricating articles of manufacture requiring high degrees of hardness or wear resistance, said method comprising heating a powdered mixture of AX, a source of B, and, optionally, an amount of X, at a temperature less than three fourths of the lesser of the melting points of AX and the source of B and under pressure to cause incomplete reaction of the mixture with minimal grain growth and to provide a densified, multi-phase material comprising, as principal components, at least one compound AX and at least one compound ABX, wherein A and B are different materials selected from titanium, zirconium, hafnium, vanadium, niobium, tantalum, chromium, molybdenum and tungsten and X is selected from boron, carbon, silicon and nitrogen. At least when ABX is a tungsten/molybdenum carbide, the ABX component is of varying stoichiometry. The reaction product may also comprise a residual amount of the source of B if such is not completely consumed in forming the compound(s) ABX. The reaction product, when sufficiently densified, provides the desired hardness and wear resistance.

It is believed that temperatures in excess of three fourths of the lesser melting point lead to excessive grain growth and drive the reaction toward complete reaction of the AX. These results are believed to be undesirable. The consolidated product suitably has a Vickers hardness of at least 1900 kg/mm² measured using a 1 kg load. The Vickers hardness is beneficially at least 2200 kg/mm². The method may further comprise one or more preliminary steps such as forming the powdered admixture of AX and a source of B, and converting the admixture into a shaped greenware article. The method may also comprise one or more finishing steps subsequent to densification.

In a related aspect, the present invention is a material suitable for use in fabricating articles of manufacture requiring high degrees of hardness or wear resistance, said material being densified, multi-phase, and fine-grained; comprising, as principal components, at least one compound AX and at least one compound ABX, wherein A and B are different materials selected from titanium, zirconium, hafnium, vanadium, niobium, tantalum, chromium, molybdenum and tungsten and X is selected from boron, carbon, silicon and nitrogen; and being obtainable by the method of the invention. At least when ABX is a tungsten/molybdenum carbide, the ABX component is of varying stoichiometry.

In another related aspect, the present invention is an improved wear-resistant article formed from a materials of the invention. Although SiC and B₄C have greater hardness than materials of the present invention wherein AX is tungsten carbide and the source of B is Mo₂C (see Table II), the latter materials have surprisingly improved wear resistance and performance in extreme wear applications such as nozzles, e.g., waterjet cutting nozzles or mixing tubes, abrasive blast nozzles, water blast nozzles, spray dry nozzles, and paint spray nozzles.

The materials of the present invention are also useful in other applications such as orifices, e.g., choke valves and flow meter parts; bushings; pump and valve parts; tiles, sleeves, chutes, tubes and other parts used in handling abrasive materials such as coal or mineral slurries; cutting tools, e.g., indexable inserts, end mills, router bits, reamers, drills, saw blades, and knives used, where appropriate, for machining or cutting materials such as metals, plastics, wood products and composites; dies, capstans, rollers, guides, punches, and forming tools used for wire drawing, tube drawing, extrusion, molding, textile manufacturing and other operations requiring hardness or wear resistance; powder compacting dies; EDM current contacts and guides; sporting equipment; and precision parts for timepieces. This listing of suitable applications is solely for purposes of illustration and is not intended to be a definitive listing of all potential applications. Other uses should be readily apparent without undue experimentation.
Figure 1 is a graphic portrayal of Vickers Hot Hardness Test data for Example 1 and Comparative Examples A and F in contrast to literature values reported for an alloy of Al₂O₃ and TiC.
Figure 2 is a graphic portrayal of the relationship between Vickers Hardness and wear resistance for the densified materials of Examples 1 and 8-13 wherein A is tungsten, B is molybdenum and X is carbon. The starting Mo₂C content, based upon weight of starting powder, for each of the points is as follows: A = 50 wt-%; B = 20 wt-%; C = 12 wt-%; D = 6 wt-%; and E = 1 wt-%.
Figure 3 is a graphic portrayal of the relationship between Vickers Hardness and starting Mo₂C content for the densified materials of Examples 9-16 and Comparative Example K.
Figure 4 is a graphic portrayal of the hot isostatic press cycle of Example 26 in terms of time versus pressure.

The present invention employs a material AX wherein A is selected from titanium, zirconium, hafnium, vanadium, niobium, tantalum, chromium, molybdenum and tungsten and X is selected from boron, carbon, silicon and nitrogen. A is beneficially tungsten, hafnium or titanium, desirably tungsten or titanium and preferably tungsten. X is beneficially carbon, silicon or nitrogen, desirably carbon. As such, tungsten carbide is a preferred, commercially available material. The tungsten carbide has an average grain size which is suitably ten micrometers or less, beneficially five micrometers or less, desirably one micrometer or less and preferably from 0.4 to 0.8 micrometer. Acceptable grain sizes for other materials of the formula AX approximate those for tungsten carbide and are readily determined without undue experimentation. The material AX is preferably in powder or particulate form.

Addition of one or more auxiliary or binding metals, such as those of the iron group, e.g., cobalt, while permissible provided they do not adversely affect physical properties of resultant compositions, is believed to be unnecessary. Although cobalt is not an essential component, inadvertent addition of trace amounts is believed to be unavoidable if milling or attritor media used to form powdered mixtures contain an amount of cobalt. Cobalt, in particular, aids in forming mixed carbides which may lower densification temperatures to 1400°C or lower, depending upon the composition. However, cobalt is not believed to be essential for complete densification. One need only use higher temperatures in the absence of cobalt to approach or achieve complete densification.

The present invention also employs a source of B. B is selected from titanium, zirconium, hafnium, vanadium, niobium, tantalum, chromium, molybdenum and tungsten. B is also not she same as A. In other words, when A is tungsten, B may be any of the aforementioned materials other than tungsten. B is beneficially molybdenum, vanadium, zirconium, chromium, and, when A is not tungsten, tungsten. B is desirably molybdenum or chromium, and preferably molybdenum. The source of B is preferably in powder or particulate form.

The source of B includes the aforementioned metals as well as the boron, carbon, silicon and nitrogen derivatives thereof. The derivative, where used, is desirably chemically consistent with AX. That is, if X is carbon, the derivative of B is desirably a carbide or subcarbide of B. By way of illustration, sources of molybdenum include molybdenum metal, molybdenum carbide (MoC), and molybdenum subcarbide (Mo₂C). If B is an elemental powder, such as molybdenum metal, one may, if so desired, add an amount of X, carbon in this instance, which is desirably less than or equal to that amount needed to equate stoichiometrically with other sources of molybdenum such as MoC and Mo₂C. Addition of more than a stoichiometric equivalent, while possible, may leave residual unreacted X, carbon in this instance, which, in turn, may adversely affect physical properties, e.g., Vickers Hardness, of resultant densified materials.

A preferred source of molybdenum is the subcarbide Mo₂C. Mo₂C is believed to serve as a source of both molybdenum and carbon for preparation of the mixed carbides. A suitable, but less preferred, source of molybdenum is molybdenum metal. Another suitable, but even less preferred, source of molybdenum is molybdenum carbide (MoC). Combinations of two or more sources of molybdenum also provide satisfactory results. The molybdenum source is preferably in powder or particulate form.

The source of B is employed in an amount sufficient to allow the formation of at least one compound ABX wherein A, B and X are as defined herein. The amount is sufficient to form said compound(s) without providing such a large residuum that physical properties or performance of the reaction product is degraded enough to cause the reaction product to have no practical utility. The amount is also less than that which would fully react all of AX. Such amounts vary depending upon the source of B, but are readily determined without undue experimentation.

By way of illustration, the source of B, when B is molybdenum, is employed in an amount sufficient to allow the formation of at least one tungsten-molybdenum mixed carbide. The molybdenum source is desirably employed in an amount sufficient to provide the final composition with a molybdenum content of one weight percent or more. When the molybdenum source is Mo₂C, the amount is suitably from one to thirty, desirably from three to 20, and preferably from six to ten, percent by weight, based upon the weight of the total amount of Mo₂C and WC starting materials.

The method of the present invention comprises subjecting a powdered admixture of AX, a source of B, and, optionally, X to densification conditions sufficient to produce a consolidated product of an incomplete reaction between AX and B, said product comprising at least one compound AX and at least one compound ABX. The variables A, B and X are as defined herein. The densification conditions are selected to minimize grain growth and include a temperature which is less than three fourths of the lesser of the melting points of AX and the source of B, but greater than a temperature at which no appreciable consolidation occurs, and a pressure sufficient to achieve a desirable degree of densification. The reaction product is preferably substantially fully dense.

As used herein, the terms "incomplete reaction", "incomplete reaction product" and "product(s) of an incomplete reaction" all refer to the reaction between AX and the source of B wherein at least a portion of AX does not react with the source of B. As a consequence, that portion is admixed with ABX and, optionally, a small amount of the source of B in products prepared in accordance with the present invention.

When A is tungsten, B is molybdenum and X is carbon, the densification conditions are beneficially sufficient to produce a material having a Vickers hardness, measured using a 1 kg load, of at least 2200 kg/mm². The Vickers hardness is desirably more than 2300 kg/mm² and preferably more than 2400 kg/mm². Lower Vickers hardness values, e.g., 1900 kg/mm² or less, are readily attainable if the material is to be used in applications wherein the higher hardness values are not needed. One means of attaining such lower values is to select molybdenum metal as the molybdenum source.

When elements other than tungsten, molybdenum and carbon are substituted, respectively, for A, B and X, the resultant densified materials can provide Vickers hardness values as low as 1000 kg/mm². Figure 2 shows a generally linear relationship between Vickers hardness and wear resistance for the tungsten/molybdenum/carbon densified materials. Analogous densified materials, obtained from the aforementioned substitutions, should behave similarly. As such, the wear resistance of a 1000 kg/mm² Vickers hardness material should be much lower than that of a 2400 kg/mm² Vickers hardness material. Because of chemical compatibility or other reasons, the lower hardness materials may, however, still show exceptional utility in certain applications.

The powdered admixture may be prepared by any one of a number of conventional mixing processes so long as a generally uniform admixture is obtained and no adverse effects upon physical properties of the resultant material are observed. The use of an attritor, wherein balls of hard material are used to facilitate mixing, provides particularly satisfactory results even if small portions of the balls, typically formed from a tungsten carbide/cobalt material, are abraded therefrom during mixing and added to the admixture. The presence of a minor amount of cobalt in reaction products or final materials does not adversely affect the physical properties of the densified material. The use of balls formed from the same material as that being mixed, e.g., tungsten carbide/molybdenum carbide balls where A is tungsten, B is molybdenum and X is carbon, reduce the inadvertent addition of cobalt.

The starting materials, AX, the source of B, and, optionally an amount of X, are beneficially in particulate or powder form before they are converted to an admixture. When AX is tungsten carbide and B is molybdenum, the starting materials suitably have an average particle size of less than 5 micrometers. Mo₂C powders, the preferred source material when B is molybdenum, are commercially available in at least two average particle sizes: four micrometers and two micrometers. It is believed that small particles, particularly of Mo₂C, offer more advantages than large particles, at least in terms of hardness, wear and residual unreacted Mo₂C. Small particles, as a general rule, also require less mixing time than large particles. As such, the powders desirably have an average particle size of less than 2 micrometers. Similar particle sizes suffice for other starting materials of the present invention.

Mixing of the powders in an attritor is beneficially accomplished with the aid of a liquid such as heptane. In order to facilitate greenware formation subsequent to mixing, a binder such as paraffin wax can be added during the final stages of attrition. Desirably, the attrited mixture is dried before further processing. Particularly satisfactory results are obtained by screening or classifying the attrited and dried mixture to remove unwanted agglomerates and fines.

The method of the present invention may also comprise a second preliminary step wherein the attrited, dried and classified mixture is converted to a preform. Preforms can be prepared using technology known in the powder metals or ceramics industries. See, e.g., US-A-4,446,100; and Modern Ceramic Engineering, Chapter 6, pages 178-215 (1982).

A typical procedure for converting a particulate material, which can contain e.g. reinforcements, fillers, densification aids, binders, lubricants, dispersants, and/or flocculants, into a preform begins by forming or shaping the powder into a desired configuration using uniaxial pressing, isostatic pressing, slip casting, extrusion, injection molding or any similar technology. The resulting article is then prepared for densification by e.g. thermal or chemical debindering, pre-sintering, green machining, or re-isopressing. A protective coating can be applied to the resulting article to prevent reaction with the environment. In extreme cases, the article can be "canned", or placed in an impervious container, to permit handling without atmospheric contamination. The resulting article, as prepared for densification, is referred to herein as "greenware".

When B is molybdenum, densification is suitably conducted at a temperature of less than 1600°C. Temperatures in excess of 1600°C, e.g., about 1650°C, offer no appreciable advantages in terms of an increase in density. Such temperatures do, however, provide a significant disadvantage in that they promote grain growth which is believed to adversely affect performance of the densified material in practical considerations like hardness. Temperatures which are too low to achieve adequate densification are unacceptable. It is believed that adequate densification cannot be achieved much below one-half the melting temperature of the molybdenum source. Of the three preferred molybdenum sources, molybdenum metal, Mo₂C and MoC, molybdenum metal has the lowest melting point at 2617°C. As such, a reasonable lower temperature limit for densification is 1300°C. The range of temperatures for densification is desirably from 1350°C to 1500°C. Temperature ranges for other combinations of AX and B are readily determined without undue experimentation.

The greenware is subjected to pressure assisted densification using one of several techniques known to those skilled in the art whereby the greenware is desirably subjected to pressure at elevated temperatures to produce a desired article. These techniques include hot pressing, hot isostatic pressing (HIP'ing) and rapid omnidirectional compaction (ROC). Although any of these techniques may be used with varying degrees of success, particularly suitable results are obtained by the ROC technique which employs mechanically induced pressure, e.g., that generated by using a forging press, as a means of densifying greenware.

A desirable method of converting the greenware into a satisfactory densified article is described in US-A-4,744,943. When such a method is employed, the pressure is suitably applied for a period of time of less than one hour. The period of time is beneficially less than thirty minutes, desirably less than one minute and preferably less than ten seconds. In order to facilitate recovery of resultant densified parts, the greenware is beneficially wrapped in graphite foil or some other substantially inert material prior to being placed in a glass pocket fluid die or other densification medium.

US-A-4,081,272 discloses a glass-encapsulated HIP process. US-A-3,622,313 discloses a HIP process. If the glass-encapsulated process is used, a desirable modification includes evacuating the glass capsule containing a part to be densified and eliminating the use of powdered glass. Application of pressure suitably occurs over a period of one hour or less.

The densified article prepared in the manner described hereinabove is a multi-phase, fine-grained composite containing, as principal components, at least one compound ABX and at least one compound AX. When A is tungsten, B is molybdenum and X is carbon, the reaction product will contain tungsten carbide and at least one mixed carbide of tungsten and molybdenum of varying stoichiometry. If the source of B is not fully converted to the compound ABX, the reaction product will also contain an amount of said source of B, e.g., Mo₂C. The amount may vary from as little as a trace amount, e.g., 0.01 percent by weight or less, to a much larger quantity depending upon a variety of interrelated variables. Such variables include starting material selection, adequacy of mixing, and densification parameters. Finally, if an attritor is used for mixing and the balls contained therein are formed at least partially from a material other than the starting materials, e.g., cobalt, that material may be incorporated into the composite as, for example, part of an additional mixed carbide phase.

The densified article exhibits surprisingly improved hardness and wear resistance in comparison to a like article formed from tungsten carbide/cobalt. The Vickers hardness of an article representative of the present invention, e.g., that produced when A is tungsten, B is molybdenum and X is carbon, is suitably at least 2200 kg/mm² measured using a 1 kg load. The Vickers hardness is beneficially at least 2300 kg/mm², and desirably at least 2400 kg/mm². As noted hereinabove, lower Vickers hardness values on the order of 1900 kg/mm² or even lower may be acceptable for some applications. Also as noted hereinabove, those hardness values are readily attainable with the process of the present invention. The article suitably exhibits an abrasion wear resistance of at least 500 cm⁻³ measured by the ASTM G65-80 method. The abrasion wear resistance is desirably at least 550 cm-3. The article beneficially exhibits an erosion wear rate of no more than 3X10⁻³ mm³/g of abrasive measured at a 30 degree angle measured by the ASTM G76-83 method. The article desirably exhibits an erosion wear rate of no more than 2X10⁻³ mm³/g of abrasive measured at a 90 degree angle measured by the ASTM G76-83 method. Although lower wear rates would clearly be desirable, measurement of such rates with currently available equipment is quite difficult, if not impossible. Skilled artisans will recognize that hardness and wear resistance vary depending upon the materials represented by A, B and X. Skilled artisans will recognize that wear resistance is proportional to hardness and that softer materials may provide an abrasion wear resistance below 500 cm⁻³. These materials may be suitable in extreme temperatures or in chemically aggressive environments.

The densified article suitably has a fine-grained structure with an average grain size of less than ten micrometers. The grain size is beneficially less than five micrometers and desirably less than one micrometer.

The articles of this invention generally have a density of 85 percent of theoretical density or greater. The density is beneficially more than 90 percent, desirably more than 95 percent and preferably about 100 percent of theoretical density. "Theoretical density", as used herein, is a calculated value based upon volume fraction and density of the starting components. "High density", as used herein, refers to a density of at least 90 percent of theoretical density. The material of the invention is particularly useful for the fabrication of cutting tools and nozzles, such as waterjet cutting nozzles.

The following examples and comparative experiments illustrate the present invention. All parts and percentages are by weight and all temperatures are in ° centigrade (°C) unless otherwise indicated. Examples of the present invention are designated by Arabic numerals whereas comparative examples are identified by capital letters.

### Example 1

The starting powder is a mixture of 94 percent tungsten carbide powder having an average particle size of 0.8 micrometer, and 6 percent Mo₂C having an average particle size of about four micrometers. The powder mixture is intensely mixed, in the presence of heptane, in an attritor containing fifty kilograms of tungsten carbide-cobalt balls for 8 hours. About 2-3 percent paraffin wax is added as a binder during the last thirty minutes of attritor mixing. The resultant mixture is dried and screened through a 20 mesh (0.84 mm) screen. Greenware parts are made by cold-pressing the mixture which passes through the screen in steel tooling at 5,000 pounds per square inch (psi) (35 MPa). The cold-pressed parts are then cold isostatically pressed at 30,000 psi (210 MPa). The resultant parts are dewaxed under vacuum at 350°C. The greenware is then placed into a glass pocket fluid die, or isostatic die assembly, preheated at 1400°C for 2 hours in a nitrogen atmosphere, and then isostatically pressed at 120,000 psi (830 MPa) for 5 seconds. The pressing procedure is described in more detail in US-A-4,744,943; US-A-4,428,906; and US-A-4,656,002,. The fluid die is cooled in air and the parts are recovered and sand blasted.

Analytical work involves the use of metallography, light microscopy, analytical scanning electron microscopy (ASEM), electron probe analysis (EPA), analytical transmission electron microscopy (ATEM), and x-ray diffraction (XRD). Microstructures are observed under the SEM, ATEM, and light microscopes. Determination of the presence of a reaction phase makes use of XRD. Composition of the reaction phase is determined by EPA and ATEM. Volume fraction of phases is determined by stereology of BSE images, and grain counting in ATEM.

Analysis of the composite indicates a bulk composition of 88.3 percent by weight W, 5.6 percent Mo, and 6.1 percent C. The material is a discrete, multi-phase composite including about 28.5 percent by volume WC, about 70 percent by volume of a mixed tungsten-molybdenum carbide (MoC-WC containing 3-32 mole percent MoC and 0.2 weight percent Co), about 1.3 percent by volume of a mixed cobalt-tungsten-molybdenum carbide having a cobalt content of 2-10 weight percent, about 0.01 percent by volume Mo₂C, and about 0.2 percent by volume voids. The material is fully granular with no binder phase or continuous phase. The material also displays no discernible grain separation. The mixed tungsten-molybdenum carbide phase is a continuum of compositions in the range of 1.5-19 weight percent Mo, or 3-32 mole percent MoC in the mixed carbide. The average composition of the mixed carbide phase is 7.2 weight percent Mo or 13.7 mole percent MoC in the mixed carbide phase.

Grain size distribution is determined using the intercept method described by Underwood in Quantitative Stereology, Addison-Wesley, Reading, MA (1970). The average grain size is about 0.22 micrometer, with 80% of the grains having a size of less than 0.3 micrometer. The final WC grain size is about 0.25 µm. The physical properties of the parts are summarized in Table I.

**TABLE I**

| Physical Properties of Articles Prepared in Ex. 1 | | |
|---|---|---|
| Property | Measured Value | Method |
| Density | 14.9 g/cm³ | Water immersion ASTM B311-58 |
| Hardness | 2650 kg/mm² | Vickers-1 kg ASTM E384-73 |
| Palmqvist Toughness (W) | 25 kg/mm | Palmqvist indentation |
| Strength | 950 MPa | Transverse rupture strength ASTM B406-76 |

| Wear Rate | | |
|---|---|---|
| A. Abrasion | 693 1/cm³ | ASTM G65-80 |
| B. Erosion | 0.9 x 10⁻³ mm³/g (30°) | ASTM G76-83 |
| | 0.7 x 10⁻³ mm³/g (90°) | |

The data presented in Table 1 show that the composite exhibits outstanding hardness and wear resistance. Similar results are expected with other compositions of the present invention.

### Example 2

The process of Example 1 is repeated except that the Mo₂C starting powder is replaced with 11.3 percent Mo. Analytical data indicates the final composite is 72 percent WC, 25 percent of a mixed (W, Mo)C phase, and 3 percent Mo₂C, with the primary binding phase having the following composition: 61 percent W, 33 percent Mo, 6 percent C. The Vickers 1 kg hardness of the composite is 1925 kg/mm².

### Example 3 and Comparative Examples A-I

The process of Example 2 is repeated except that 6.8 percent Mo is employed. Analytical data indicates that the final composite has a composition similar to that of Example 1. The Vickers 1 kg hardness of the composite is 2570 kg/mm². Results similar to those shown in Examples 1-3 are attainable with other components and process conditions, all of which are disclosed herein.

The tungsten carbide/cobalt material of Comparative Example A is formed into a greenware part and densified in a manner similar to that of Example 1. Comparative Examples B-E and G are densified by sintering and Comparative Examples F, H and I are densified by hot pressing. The latter procedures are well known in the art. The materials of Comparative Examples A-I and the materials produced in Examples 1 and 3 are then tested for wear rate as measured by abrasion and erosion. The ASTM G65-80 dry sand rubber wheel test is used to measure abrasion, while erosion is measured according to the procedure of ASTM G76-83. Abrasion wear is recorded as the inverse of the volume loss. Erosion data is reported as volume loss/gram of abrasive. The results of these tests, as well as the Vickers hardness for the materials, is reported in Table II.

**Table II**

| Example/Comparative Example | Properties of WC-Mo and WC-Mo₂C Composites Compared to Other Hard Materials | | | | |
|---|---|---|---|---|---|
| | Material | Vickers Hardness kg/mm² | Wear Test Data | | |
| | | | Wear Number (Abrasion) 1/cm³ | Erosion (X10⁻³ mm³/g | |
| | | | | 30° | 90° |
| 3 | WC-6.8 Mo | 2570 | 700 | 2.1 | 1.0 |
| 1 | WC-6.0 Mo₂C | 2650 | 693 | 0.9 | 0.7 |
| A | WC-6.0 Co | 1800 | 440 | 21.4 | 8.7 |

| | WC/Low Co | | | | |
|---|---|---|---|---|---|
| B | K-602* (1.5) | -- | 275 | 5.8 | 4.8 |
| C | K-11* (2.8) | -- | -- | 4.8 | 4.3 |
| D | K-8* (3.8) | -- | -- | 6.4 | 3.7 |
| E | Al₂O₃ | 2000 | -- | 30.4 | 39.5 |
| F | Si₃N₄ | 1550 | -- | 15.0 | 25.5 |
| G | SiC | 2800 | 150 | -- | 18.0 |
| H | B₄C | 3100 | 139 | 1.6 | 1.2 |
| I | TiB₂ | -- | 129 | -- | -- |

| | | | | | |
|---|---|---|---|---|---|
| *Commercially available from Kennametal Inc. The numbers in parentheses indicate weight percent of binder material. | | | | | |
| -- Not measured. | | | | | |

As can be seen from Table II, the tungsten carbide/molybdenum-containing materials of the present invention have surprisingly high hardness and wear-resistance in comparison to tungsten carbide/cobalt and other hard materials.

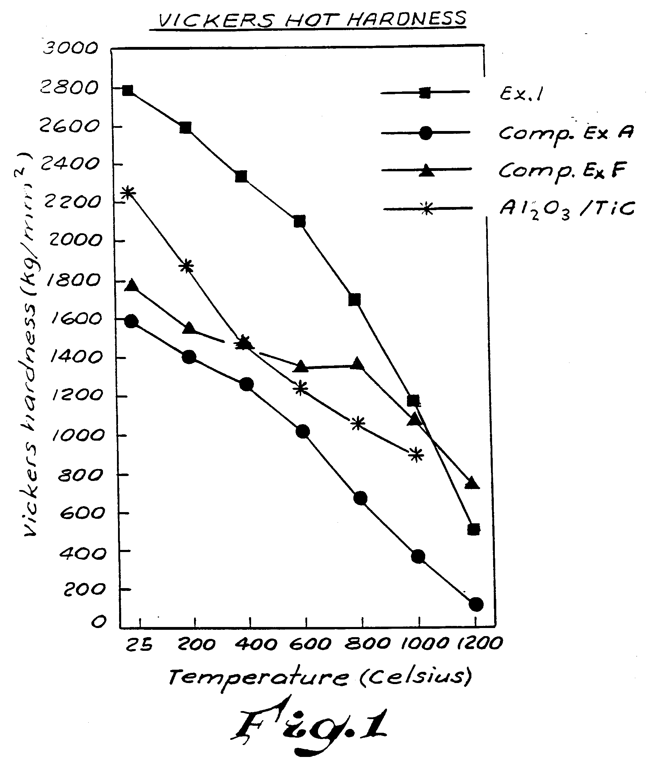

The materials of Example 1 and Comparative Examples A and F are subjected to Vickers Hot Hardness testing in accordance with the procedure described by B. North in Engineering Applications of Brittle Materials, page 159 (1985). Results of the testing, with a one kilogram load and a ten second indent time at various temperatures, are graphically displayed in Figure 1. The Figure also displays literature values reported for an alloy of Al₂O₃ and TiC. The data shown in Figure 1 indicates the suitability of compositions of the present invention for high temperature applications such as cutting tools for metals. Similar results are obtained with other materials and process conditions, all of which are disclosed herein.

### Examples 4-7

The procedure of Example 1 is replicated save for increasing the tungsten carbide starting material average grain size in Examples 5, 6 and 7 respectively to 1.6 micrometers, 3.5 micrometers and ten micrometers and increasing the load for the Vickers Hardness test from one kilogram to 13.6 kilograms. Vickers Hardness test results, in kg/mm², are as follows: Example 4 - 2480; Example 5 - 2320; Example 6 - 2100; and Example 7 - 1925. The Vickers Hardness test data shows that starting material grain size affects at least the hardness of the resultant material. Similar results are expected with other materials and process conditions, all of which are disclosed herein.

### Example 8 and Comparative Example J

The starting powder for each process is a mixture of 99 percent of the same tungsten carbide powder as used in Example 1 and one percent of a Mo₂C powder having an average particle size of two micrometers.

The powder mixture of Comparative Example J is mixed in a ball mill, in the presence of heptane, for a period of 24 hours. About one percent of paraffin wax is added during the last thirty minutes of milling. Greenware parts are formed and dewaxed as in Example 1. The parts are then heated in an argon atmosphere at a temperature of 2225°C for a period of thirty minutes to accomplish densification by sintering. The parts have a very coarse grain structure, a density of about 96 percent of theoretical density and a Vickers hardness of about 1100 kg/mm².

The powder mixture of Example 8 is converted to densified parts by the procedure of Example 1. The parts have a very fine grain structure, a density of about 98 percent of theoretical density and a Vickers hardness of about 2750 kg/mm².

A simple comparison of the foregoing results demonstrates that the processes provide substantially different results from the same starting materials and that the process of the present invention produces a much harder material. Similar results are obtained with other materials and process parameters which are representative of the present invention.

### Examples 9-16 and Comparative Example K

Using varying amounts of the tungsten carbide powder of Example 1 and the Mo₂C powder of Example 8, a number of densified parts are prepared by following, with two exceptions, the procedure of Example 1. In one exception, 100% Mo₂C powder is processed by the procedure of Example 1 except for omission of attritor mixing. In the second exception, greenware parts for Examples 14 and 15 are wrapped in graphite foil, e.g., that commercially available from Union Carbide under the trade designation Grafoil®, to facilitate part recovery. The densified parts are subjected to the following physical property tests: (a) Vickers Hardness (VHN), with a one kilogram load, in terms of kg/mm²; (b) Palmqvist Toughness (W), with a 13.6 kilogram load, in terms of kg/mm; (c) Wear Number (WN), per ASTM G-65-80, in terms of 1/cm³; and (d) Volume Losses (VL) at 30° and 90°, per ASTM G-76-83, in terms of 10⁻³ mm³/gm. The Palmqvist Toughness test is described by R. Warren and H. Matzke in "Indentation Testing of a Broad Range of Cemented Carbides", Science of Hard Materials, pages 563-82, R. K. Viswanadham, D. J. Rowcliffe and J. Gurland eds., Plenum Press (1983). Physical property data obtained from these tests is summarized in Table III which follows:

**Table III**

| Example/Comparative Example | Physical Property Test Results | | | | | |
|---|---|---|---|---|---|---|
| | % Mo₂C | VH | W | Wear Test Data | | |
| | | | | WN | VL | |
| | | | | | 30° | 90° |
| 9 | 1 | 2750 | 24.7 | 632 | 0.03 | 0.10 |
| 10 | 3 | 2740 | 23.9 | -- | -- | -- |
| 11 | 6 | 2650 | 24.9 | 600 | 0.09 | 0.05 |
| 12 | 12.6 | 2540 | 24.6 | 564 | 0.35 | 0.08 |
| 13 | 19.8 | 2350 | 24.2 | 521 | 0.14 | 0.09 |
| 14 | 30 | 2176 | 21.8 | 369 | 0.06 | 0.02 |
| 15 | 40 | 2107 | 20.8 | 408 | 0.11 | 0.04 |
| 16 | 50 | 1690 | 19.5 | 299 | 4.1 | 2.60 |
| K | 100 | 1400 | -- | -- | -- | -- |
| -- not measured | | | | | | |

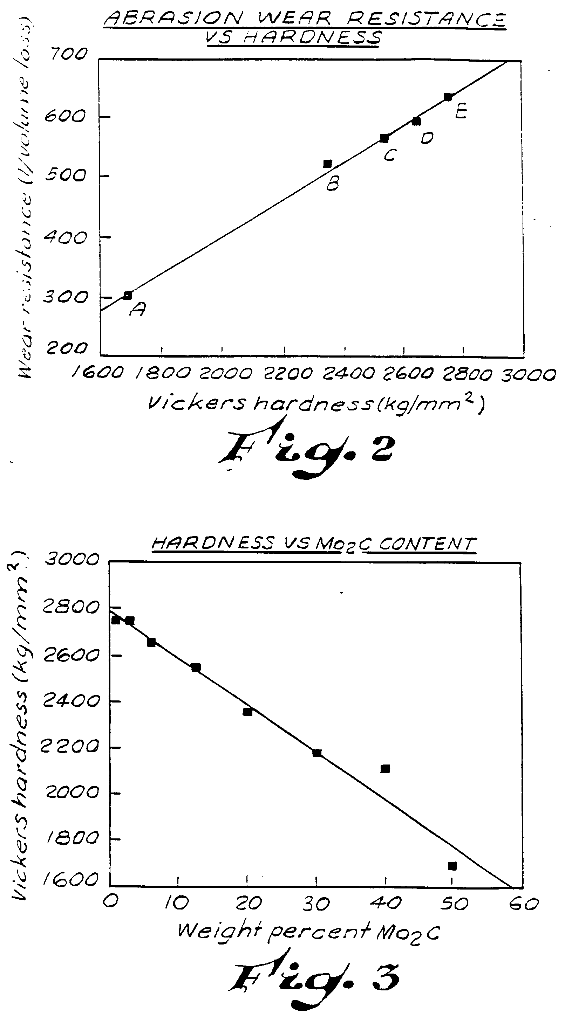

The data presented in Table III, and graphically portrayed in Figure 3, demonstrate the suitability of the process of the present invention for preparing hard, wear-resistant materials from a variety of compositions. Densified materials prepared from starting compositions wherein the amount of Mo₂C is fifty weight percent or more are clearly softer and less wear resistant than materials wherein the amount of Mo₂C is twenty weight percent or less. Similar results are obtained with other starting materials and process parameters, all of which are presented herein.

### Example 17

The procedure of Example 1 is repeated to prepare abrasive waterjet nozzles having a length of two inches (5 cm) and a bore of 0.062 inch (1.575 mm). The nozzle bore is formed by machining the article prepared from the consolidated or densified powders. The resulting nozzles are tested against commercially available tungsten carbide/cobalt nozzles according to the following procedure.

The nozzles are installed on a commercially available abrasive jet cutting machine available from Flow Systems, Inc. (Model No. 11x Dual). For a description of an example of a waterjet cutting machine, see US-A-4,648,215. The water pressure is 35,000 psi (240 MPa) and the abrasive flow rate is 1.5 pounds/minute (0-7 kg/min). The jewel size is 0.018 inch (0.4575 mm). The nozzle wear rate is determined by measuring the increase in exit bore size as a function of time. The results are summarized in Table IV.

**TABLE IV**

| Composition | Abrasive | Time (Min.) | Increase in Exit Bore Size, Inches (mm) | Wear Mil/Min (mm/min) |
|---|---|---|---|---|
| WC/Co | Al₂O₃ | 1 | +0.015(0.38) | 15(0.38) |
| WC/Mo₂C | Al₂O₃ | 42 | +0.012(0.30) | 0.29(0.0074) |
| WC/Co | Garnet | 45 | +0.012(0.30) | 0.27(0.0069) |
| WC/Mo₂C | Garnet | 435 | +0.002(0.05) | 0.0023(0.000058) |

As can be seen from Table IV, the material of the present invention wears surprisingly slower than the commercial material using alumina or garnet as the abrasive. The commercial WC/Co material wears so rapidly with the alumina abrasive that it is not economically viable in such an application. Similar results are expected with other compositions and process conditions of the present invention.

In a second series of tests, the procedure is identical except that the machine is a Model 9x Dual, the water pressure is 30,000 psi (210 MPa) and wear rate is measured by the increase in nozzle entrance bore size as a function of time. The test is continued until it is observed that nozzle wear is extensive enough to cause the water/abrasive jet stream to spread and noticeably interfere with the quality of the cut on the work piece or until sufficient time had elapsed to demonstrate the viability of a nozzle. The results are summarized in Table V.

**Table V**

| Composition | Abrasive | Time (Min.) | Increase in Entry Bore Size, In(mm) | Wear Mil/Min.(mm/min) |
|---|---|---|---|---|
| WC/Co | Garnet | 100 | +0.020(0.51) | 0.20(0.0051) |
| WC/Mo₂C | Garnet | 720 | +0.010(0.25) | 0.014(0.00035) |

Surprisingly, the test indicates that the material of the present invention provides a nozzle which lasts over 14 times longer than the present commercially available tungsten carbide/cobalt nozzle. Similar results are expected with other starting materials and process conditions of the present invention.

### Examples 18-20

The process of Example 1 is replicated with the following exceptions: (a) the starting powders and wax are processed in a commercial attritor as is typical for commercial scale production of WC/Co powders; (b) greenware parts are cold-pressed at about 10,000 psi (70 MPa), rather than 5,000 psi (35 MPa) as before; (c) the isostatic pressure is varied between 15-30 tons per square inch (tsi) (210-415 MPa) maximum pressure (as shown in Table VI); (d) isostatic press dwell time is increased to 15 or 30 seconds, also as shown in Table VI; and (e) the greenware is wrapped in graphite foil, commercially available from Union Carbide under the trade designation Grafoil®, prior to being in placed into the glass pocket fluid die. Recovered parts are subjected to density and hardness measurements as in Example 1. The data obtained from such measurements is presented in Table VI.

**TABLE VI**

| Physical Properties of Examples 18-20 | | | | |
|---|---|---|---|---|
| Example/Comparative Example | Maximum Pressure tsi(MPa) | Dwell (sec) | Density (g/cm³) | VHN (kg/mm²) |
| 18 | 15(210) | 10 | 12.7 | 1220 |
| 19 | 30(415) | 10 | 13.7 | 1793 |
| 20 | 15(210) | 30 | 14.7 | 2601 |

A simple comparison of the foregoing results demonstrates that at low pressures and low dwell times (Examples 18 and 19), the articles are clearly of lower density and hardness than those produced in Example 1. However, with low pressure and a longer dwell time (Example 20), a material with properties approximating those of Example 1 may be obtained.

### Examples 21-25 and Comparative Example L

The process of Example 1 is replicated except for the temperature to which the parts are preheated just prior to pressure application (the time of preheat, two hours, is not changed). This temperature is varied from 1250 to 1500°C in 50°C increments. In addition, the graphite foil wrap of Example 20 is used for the greenware. Physical property measurements for density and Vickers hardness are made in accordance with the test descriptions accompanying Example 1. Palmqvist toughness (W) is measured by Palmqvist Indentation. The measurements and preheat temperature are found in Table VII.

**TABLE VII**

| Physical Properties of Examples 21-25 and Comparative Example L | | | | |
|---|---|---|---|---|
| Example/Comparative Example | Preheat T (°C) | Density (g/cm³) | VHN (kg/mm²) | W (kg/mm) |
| L | 1250 | 14.6 | 2446 | 23.8 |
| 21 | 1300 | 14.9 | 2612 | 24.4 |
| 22 | 1350 | 14.9 | 2545 | 24.0 |
| 23 | 1400 | 15.0 | 2726 | 23.9 |
| 24 | 1450 | 15.0 | 2675 | 24.4 |
| 25 | 1500 | 15.0 | 2551 | 24.2 |

By comparison with the data from Example 1, it can be seen that in order to produce similar material, the preheat temperature is suitably above 1300°C. If a material of lower hardness can be tolerated, a lower preheat temperature may be used.

### Comparative Example M

The process of Example 20 is repeated except that the parts are cold-pressed using a dry bag isopress with 0.609 inch (1.545 mm) diameter tooling, with 30,000 pounds per square inch (210 MPa) pressure and a dwell time of 10 seconds. They are then dewaxed and loaded into fluid dies as in Example 1, and preheated at 1400°C for two hours. The preheated parts are removed from the furnace without application of pressure and allowed to cool. The parts are recovered as in Example 1. ATEM (Analytical Transmission Electron Microscopy) shows evidence of some reaction between WC and Mo₂C, but to a much lesser extent than observed in Example 1 wherein the preheated parts are subjected to isostatic pressure of 120,000 psi (830 MPa) for 5 seconds after removal from the furnace.

Analysis of the parts using the analytical techniques of Example 1 indicates a bulk composition of about 62 percent by volume WC, about 28 percent by volume of a mixed tungsten-molybdenum carbide similar to that found in Example 1 (reaction product I), about 2.5 volume percent of a high-Mo mixed tungsten-molybdenum carbide (reaction product II), about 1.5 volume percent unreacted Mo₂C, and about 6 volume percent voids. Reaction product I contains an average of about 6.8 weight percent Mo, with the range extending from about 1.8 to 17.9 weight percent Mo. Reaction product II is MoC/-WC product of varying stoichiometry with an average of 48 weight percent Mo, ranging from 27 to 72 weight percent Mo.

Comparative Example M contains considerably more unreacted WC than the material of Example 1 (62 percent vs. 28.5 percent). In turn, it also contains less of the mixed carbide reaction product A, with only 28 percent as compared to 70 percent in Example 1. Example M also contains reaction product B, a partially reacted molybdenum carbide, which Example 1 does not have, and about 1.5 weight percent unreacted Mo₂C compared to 0.01 percent in Example 1. These observations suggest that pressure is necessary to achieve an acceptable reaction between the two carbides, at least at a preheat temperature of 1400°C. The current example also contains more voids than the first, due to poor densification.

The parts have a much higher porosity than those of Example 1, 6 volume percent voids versus 0.2 volume percent voids. The high porosity precludes an accurate density measurement. The Vickers 1 kg hardness is 573 kg/mm², considerably lower than the 2650 kg/mm² of Example 1. These differences indicate that parts prepared without sufficient application of pressure are unsuitable for applications requiring high hardness. Because of the relationship between hardness and wear resistance, these parts are also believed to be unsuitable for applications requiring substantial wear resistance.

### Example 26

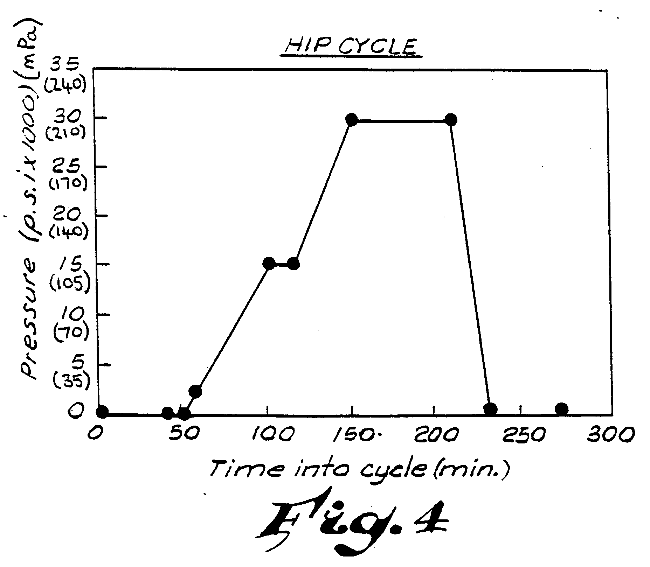

The process of Example 20 is repeated through the step involving cold isostatically pressing of the greenware at 30,000 psi (210 MPa). The resultant parts are dewaxed under vacuum at 350°C and subsequently presintered at 1400°C in order to reduce the possibility of outgassing during hot isostatic dressing (HIP). The greenware is then placed in a Pyrex® ampule, which is evacuated and sealed. The encapsulated part is placed in a HIP unit, and subjected to a gradual increase in pressure (see Figure 4 for a graphic portrayal of cycle) up to 30,000 psi (210 MPa). The temperature is concurrently increased to 1400°C. The pressure of 30,000 psi (210 MPa) and the temperature of 1400°C are maintained for one hour. Pressure and temperature are then gradually decreased and the part removed upon completion of the cycle. The part, following recovery from the ampule, is subjected to physical property testing as in Example 1. The physical properties are as follows: Density - 14.8 g/cm³; Vickers hardness - 2598 kg/mm²; and Palmqvist Toughness (W)-22.5 kg/mm. These properties compare favorably with those of Example 1 and suggest that Hot Isostatic Pressing is a viable alternate procedure to that described in Example 1.

### Example 27

The process of Example 20 is replicated except that the starting powders are changed to provide a mixture of 94 percent WC, 5.6 percent Mo, and 0.4 percent carbon black. The resultant densified material has a Vickers 1 kg hardness measurement of 2460 kg/mm². This hardness measurement suggests that substitution of an amount of X for a like amount of the source of B does not substantially reduce physical properties of the resultant densified material. It also suggests that the densified material should be useful for wear resistant applications.

### Comparative Example N

The process of Example 27 is replicated except that the starting powders are changed, and a smaller attritor is used (3.5 kg load of WC/Co balls). The starting powders are 88.2 percent W, 5.6 percent Mo, and 6.2 percent carbon black. The resultant densified material has a Vickers 1 kg hardness measurement of 725 kg/mm². This hardness measurement suggests that mixtures of elemental powders do not provide satisfactory densified materials. It also suggests poor wear characteristics. Similar results are attainable with other mixtures of elemental powders.

### Example 28

The process of Example 1 is, with certain exceptions, repeated using a chromium carbide rather than Mo₂C as a source of B. The exceptions are: (a) use of the attritor of Comparative Example N; (b) cold pressing at 10,000 psi (70 MPa) rather than 5,000 psi (35 MPa); (c) greenware is wrapped in graphite foil as in Example 15; and (d) a preheat temperature of 1500°C rather than 1400°C. The starting powder is a mixture of 95.5 percent of the same tungsten carbide powder as in Example 1 and 4.5 percent chromium carbide powder having an average particle size of - 325 mesh (less than 48 micrometers).

Analysis of the composite indicates about 3.3 volume percent unreacted Cr₃C₂, about 0.8 volume percent chromium-tungsten carbide associated with the unreacted chromium carbide, about 11 volume percent chromium-tungsten carbide in WC/WC interstices, about 0.1 volume percent voids, and about 85 volume percent unreacted WC. The composition range of the reaction product appears to be fairly narrow, based on EPA analysis: about 75 weight percent Cr, about 12 weight percent W, and about 12 weight percent C. Associated with the reaction product is about 0.4 weight percent V, which is present in the WC starting powder at a level of about 0.15 weight percent.

By observation using ATEM and use of the intercept method, average grain size of the unreacted WC is about 0.2 micrometer. Average grain size of the unreacted Cr₃C₂ is about 0.3-5 micrometer.

Physical properties of recovered parts are summarized in Table VIII. The test methods are described in Example 1.

**TABLE VIII**

| Physical Properties and Wear Data of Example 28 | |
|---|---|
| Property | Measured Value |
| Density | 14.3 g/cm³ |
| Vickers Hardness, VHN | 2428 kg/mm² |
| Palmqvist Toughness, W | 21.2 kg/mm |
| Wear Number, WN | 520 1/cm³ |

Due to the high hardness and wear resistance of this material, it can be expected that it would perform well in applications similar to those for WC/Mo₂C, with the potential added feature of improved oxidation resistance at higher temperature due to the presence of Cr₃C₂.

### Examples 29-31

The process of Example 28 is replicated except that the weight percent of Cr₃C₂ in the powder mixture, and the preheat schedule, are changed. The preheat schedule used for the following parts involves a ramp from room temperature to 1500°C at 10°/min, followed by a 15 minute hold at temperature prior to pressure application. Three different compositions are used: 6, 10, and 20 weight percent Cr₃C₂. Table IX summarizes certain physical property test results for each composition.

**TABLE IX**

| Physical Properties of Examples 29-31 | | | |
|---|---|---|---|
| Example | Weight %Cr₃C₂ | Vickers Hardness, VHN (kg/mm²) | Palmqvist Toughness W (kg/mm) |
| 29 | 6 | 2354 | 18.9 |
| 30 | 10 | 2500 | 21.4 |
| 31 | 20 | 2502 | 21.6 |

From this data, it appears that good material can be obtained from a wide range of compositions. Examples 30 and 31 would in particular be expected to demonstrate high wear resistance, by comparison with the hardness and wear data on Example 28, and by analogy from the Abrasion Resistance vs. Hardness curve of Figure 2. Similar results are expected with other compositions disclosed herein.

### Example 32

The procedure of Example 28, save for a change in the preheat cycle, is repeated using titanium carbide rather than tungsten carbide as a source of AX and vanadium carbide rather than Cr₃C₂ as a source of B. The starting powder is a mixture of 88.4 weight percent titanium carbide having an average particle size of 3.8 micrometers and 11.6 weight percent vanadium carbide having an average particle size of 5.6 micrometers. Preheat temperature prior to pressure application changed to a cycle of 2 hours at 600°C, 2 hours at 1400°C, and 2 hours at 1650°C.

Analysis of the microstructure by the techniques of Example 1 indicates about 91 volume percent mixed titanium-vanadium-tungsten carbide with small quantities of titanium carbide, 8.1 volume percent voids, and 1.0 volume percent impurity carbide. No unreacted vanadium carbide is detected using ASEM, EPA, ATEM, or XRD. EPA results indicate a fairly limited composition range for the mixed carbide reaction product: about 67 weight percent Ti, about 20 weight percent C, about 10 weight percent V, about 3 weight percent W, and about 0.2 weight percent Si. W is found, by Proton-Induced X-ray Emission, in the powder mix at 3 weight percent but not in the original powders prior to mixing. As such, the source of W may be impurities in the attritor or the WC/Co attritor media.

Physical properties of recovered parts are summarized in Table X. The test methods are described in Example 1.

**TABLE X**

| Physical Properties of Example 32 | |
|---|---|
| Property | Measured Value |
| Density | 4.7 g/cm³ |
| Hardness, VHN | 1137 kg/mm² |
| Palmqvist Toughness, W | 15.5 kg/mm |

The hardness and wear resistance are expected to improve as the void volume decreases. Process optimization, perhaps through an increase in preheat temperature, a reduction in starting powder grain size, or more intense milling, is expected to provide a reduction in void volume.

### Example 33

The procedure of Example 28 is repeated with a different mixture of starting powders and a preheat temperature of 1400°C instead of 1500°C. The starting powders are 93.1 percent WSi₂ with an average particle size of 6.1 micrometers and 6.9 percent MoSi₂ with an average particle size of 4.2 micrometers.

Analysis of recovered material reveals a microstructure containing about 51 volume percent WSi₂, about 16 volume percent of a first reaction product with about 3 percent molybdenum, about 8 volume percent of a second reaction product with about 56 percent molybdenum, about 18 volume percent silica, about 6 volume percent WC with low Co, less than one volume percent voids, and about one volume percent miscellaneous impurities. Based upon EPA and ATEM, the first reaction product consists of about 72 percent tungsten, 23 percent silicon and 3 percent molybdenum. Unreacted molybdenum disilicide is not detected by ASEM, EPA or ATEM. The miscellaneous impurities and silica can be accounted for by considering impurity pickup from the attritor or attritor media, and reaction of the part with glass from the fluid die pocket in which it is heated and pressurized.

The recovered material has a density of 8.8 g/cm³ and a Vickers Hardness of 1395 kg/mm². It is expected that physical properties of the material can be improved by reducing the amount of SiO₂ in the sample. One possible means of doing so is to process these materials in an oxygen-free environment. Other means are known to skilled artisans.

### Example 34

The procedure of Example 28 is repeated, except for the preheat schedule, with a different mixture of starting powders. The powders are 86.9 percent TiN with an average particle size of 1.6 micrometers and 13.1 percent ZrN with an average particle size of 8.2 micrometers. The alternate preheat schedule involves a 10 degree per minute ramp from room temperature to 1800°C, followed by a 15 minute hold at temperature.

Microstructure of the sample is analyzed by the methods of Example 1. There is an extensive reaction between the TiN and the ZrN, yielding a titanium-zirconium nitride which comprises about 85.6 volume percent of the sample. Unreacted TiN is present at about 2.0 volume percent, and there is a trace amount of unreacted ZrN (<0.1 volume percent). The remainder of the sample consists of about 4.7 volume percent ZrO₂, about 1.0 volume percent tungsten silicide (with a low Fe content), and about 6.6 volume percent voids. The tungsten silicide contaminant is presumed to come from the attritor/media. The composition of the titanium-zirconium-nitride reaction phase is about 70.9 weight percent titanium, about 6.9 weight percent zirconium, and about 22.2 weight percent nitrogen.

Physical property measurements taken on recovered samples are listed in Table XI.

**Table XI**

| Physical Properties of Example 34 | |
|---|---|
| Property | Measured Value |
| Density | 5.2 g/cm³ |
| Hardness, VHN | 1152 kg/mm² |
| Palmqvist Toughness, W | 14.9 kg/mm |

The hardness of this material suggests that it should not have a level of wear resistance as high as that of the material prepared in Example 1. This material is useful for applications where lower hardness or wear resistance or both are acceptable.

### Examples 35-37

The procedure of Example 28, save for a change in the preheat schedule, is replicated with different mixtures of starting powders. The starting powders are hafnium carbide with an average particle size of 2.1 micrometers, and tungsten metal with an average particle size of about one micrometer. The ratio of HfC:W are either 85:15 or 70:30. The preheat schedule involves a ramp from room temperature at 10°C/minute to the desired preheat temperature of 1650°C or 1800°C. The samples are then held at temperature for fifteen minutes prior to pressure application.

Physical property measurements are presented in Table XII together with the relevant preheat temperature and weight percent tungsten metal powder.

**Table XII**

| Physical Properties of Examples 35-37 | | | | | |
|---|---|---|---|---|---|
| Example | Wt-% Tungsten | Preheat Temp. °C | Density (g/cm³) | Hardness VHN (kg/mm²) | Palmqvist Toughness (W)(kg/mm) |
| 35 | 15 | 1650 | 12.5 | 1992 | 15.8 |
| 36 | 15 | 1800 | 11.9 | 1718 | 19.1 |
| 37 | 30 | 1650 | 12.6 | 2132 | 18.4 |

By observation of the samples under a scanning electron microscope, and the use of an electron dispersive spectrometer, it appears that in all three examples there is a reaction between the HfC and the W, as grains of different proportions of Hf:W can be found.

Example 37 demonstrates an improvement in hardness and toughness over Example 35, with an increase in the percentage of tungsten metal. Example 36 shows no improvement in properties with an increase in preheat temperature. The material of Example 37 shows promise for cutting tool and wear-resistant applications due to its high hardness. Similar results are expected with other compositions disclosed herein.

The materials of the present invention are, as noted hereinabove, useful in a wide variety of end use applications where wear resistance or hardness or both are needed. The materials are particularly useful in nozzles, such as sand blast nozzles and waterjet cutting nozzles, wear guides, bushings, powder compacting dies, valve parts, router bits, cutting tools, end mills, indexable inserts, and wire drawing die parts.

As indicated in the Examples, a preferred material of the invention contains, as ABX, a tungsten/molybdenum carbide product of varying stoichiometry, the product comprising from 60 to 95 weight percent tungsten, from 1 to 40 weight percent molybdenum and from 4 to 9 weight percent carbon. It is particularly preferred that ABX comprises from 77 to 89 weight percent tungsten, from 5 to 16 weight percent molybdenum and from 5 to 8 weight percent carbon.

Advantageously, the material of the invention comprises, based upon bulk composition weight, from 65 to 93 percent tungsten, from 0.9 to 28 percent molybdenum and from four to eight percent carbon.

## Claims

1. A method of preparing a material suitable for use in fabricating articles of manufacture requiring high degrees of hardness or wear resistance, said method comprising heating a powdered admixture of AX, a source of B and, optionally, X at a temperature less than three fourths of the lesser of the melting points of AX and the source of B and under pressure to cause incomplete reaction of said mixture with minimal grain growth and to provide a densified, multi-phase material comprising, as principal components, at least one compound AX and at least one compound ABX, wherein A and B are different materials selected from titanium, zirconium, hafnium, vanadium, niobium, tantalum, chromium, molybdenum and tungsten and X is selected from boron, carbon, silicon and nitrogen and wherein, when ABX is a tungsten/molybdenum carbide, the ABX component is of varying stoichiometry.

2. A method as claimed in Claim 1, wherein said material is substantially fully dense.

3. A method as claimed in Claim 1 or Claim 2, wherein the source of B is a compound BX, wherein X is as defined in Claim 1.

4. A method as claimed in any one of the preceding claims, wherein X is carbon.

5. A method as claimed in any one of the preceding claims, wherein A is selected from tungsten, hafnium and titanium and B is a material different from A selected from tungsten, zirconium, vanadium, chromium and molybdenum.

6. A method as claimed in Claim 5, wherein A is tungsten, B is molybdenum or chromium and X is carbon.

7. A method as claimed in Claim 6, wherein B is molybdenum.

8. A method as claimed in Claim 6 or Claim 7, wherein the source of B is molybdenum subcarbide (Mo₂C) or chromium carbide.

9. A method as claimed in Claim 8, wherein said powder mixture comprises molybdenum subcarbide, tungsten carbide and, optionally, carbon.

10. A method as claimed in Claim 9, wherein said powder mixture comprises 1 to 30 wt% molybdenum subcarbide, based on the total weight of molybdenum subcarbide and tungsten carbide.

11. A method as claimed in Claim 10, wherein said powder mixture comprises 3 to 20 wt% molybdenum subcarbide, based on the total weight of molybdenum subcarbide and tungsten carbide.

12. A method as claimed in any one of the preceding claims, wherein said material further comprises a residual amount of the source of B.

13. A method as claimed in any one of the preceding claims, further comprising an intermediate step of converting the admixture into a shaped greenware article prior to densification.

14. A material suitable for use in fabricating articles of manufacture requiring high degrees of hardness or wear resistance, said material being densified, multi-phase, and fine-grained; comprising, as principal components, at least one compound AX and at least one compound ABX, wherein A and B are different materials selected from titanium, zirconium, hafnium, vanadium, niobium, tantalum, chromium, molybdenum and tungsten and X is selected from boron, carbon, silicon and nitrogen; and being obtainable by a method as defined in Claim 1 and wherein, when ABX is a tungsten/molybdenum carbide, the ABX component is of varying stoichiometry.

15. A material as claimed in Claim 14 obtainable by a method as defined in any one of Claims 2 to 13.

16. A material as claimed in Claim 14, wherein the product comprises from 60 to 95 weight percent tungsten, from 1 to 40 weight percent molybdenum and from 4 to 9 weight percent carbon.

17. A material as claimed in Claim 16, wherein ABX comprises from 77 to 89 weight percent tungsten, from 5 to 16 weight percent molybdenum and from 5 to 8 weight percent carbon.

18. A material as claimed in Claim 16 comprising, based upon bulk composition weight, from 65 to 93 percent tungsten, from 0.9 to 28 percent molybdenum and from 4 to 8 percent carbon.

19. A material as claimed in any one of Claims 14 to 18 having a grain size of less than five micrometers.

20. A shaped article prepared from a material as defined in any one of Claims 14 to 19.

## Patentansprüche

1. Verfahren zur Herstellung eines Materials, das zur Verwendung bei der Herstellung von Gegenständen, die hohe Härte- und Verschleißfestigkeitsgrade erfordern, geeignet ist, wobei das Verfahren das Erhitzen eines pulverförmigen Gemisches aus AX, einem Ausgangsmaterial von B und gegebenenfalls X, bei einer Temperatur von weniger als drei viertel des niedrigeren der Schmelzpunkte von AX und des Ausgangsmaterials von B und unter Druck, umfaßt, um eine unvollständige Reaktion des Gemisches mit minimalem Kornwachstum zu erreichen, und ein verdichtetes, Multiphasenmaterial bereitzustellen, umfassend als wesentliche Komponenten mindestens eine Verbindung AX und mindestens eine Verbindung ABX, worin A und B verschiedene Materialien sind, ausgewählt aus Titan, Zirkonium, Hafnium, Vanadium, Niob, Tantal, Chrom, Molybdän und Wolfram und X ausgewählt wird aus Bor, Kohlenstoff, Silicium und Stickstoff, und worin die ABX-Komponente variierende Stöchiometrie aufweist, wenn ABX ein Wolfram/Molybdän-Carbid ist.

2. Verfahren nach Anspruch 1, worin das Material im wesentlichen vollständig dicht ist.

3. Verfahren nach Anspruch 1 oder 2, worin das Ausgangsmaterial von B eine Verbindung BX ist, worin X wie in Anspruch 1 definiert ist.

4. Verfahren nach einem der vorhergehenden Ansprüche, worin X Kohlenstoff ist.

5. Verfahren nach einem der vorhergehenden Ansprüche, worin A ausgewählt wird aus Wolfram, Hafnium und Titan und B ein von A verschiedenes Material ist, ausgewählt aus Wolfram, Zirkonium, Vanadium, Chrom und Molybdän.

6. Verfahren nach Anspruch 5, worin A Wolfram ist, B Molybdän oder Chrom ist und X Kohlenstoff ist.

7. Verfahren nach Anspruch 6, worin B Molybdän ist.

8. Verfahren nach Anspruch 6 oder 7, worin das Ausgangsmaterial von B Molybdänsubcarbid (Mo₂C) oder Chromcarbid ist.

9. Verfahren nach Anspruch 8, worin das Pulvergemisch Molybdänsubcarbid, Wolframcarbid und gegebenenfalls Kohlenstoff umfaßt.

10. Verfahren nach Anspruch 9, worin das Pulvergemisch basierend auf dem Gesamtgewicht von Molybdänsubcarbid und Wolframcarbid 1 bis 30 Gew.-% Molybdänsubcarbid umfaßt.

11. Verfahren nach Anspruch 10, worin das Pulvergemisch basierend auf dem Gesamtgewicht von Molybdänsubcarbid und Wolframcarbid 3 bis 20 Gew.-% Molybdänsubcarbid umfaßt.

12. Verfahren nach einem der vorhergehenden Ansprüche, worin das Material weiterhin eine Restmenge des Ausgangsmaterials von B umfaßt.

13. Verfahren nach einem der vorhergehenden Ansprüche, weiterhin umfassend einen Zwischenschritt des Überführens des Gemisches in einen geformten Grünkörpergegenstand vor dem Verdichten.

14. Material, das geeignet ist zur Verwendung bei der Herstellung von Fertigungsgegenständen, die hohe Härte- oder Verschleißfestigkeitsgrade erfordern, wobei das Material verdichtet, mehrphasig und feinkörnig ist, umfassend als wesentliche Komponenten mindestens eine Verbindung AX und mindestens eine Verbindung ABX, worin A und B verschiedene Materialien sind, ausgewählt aus Titan, Zirkonium, Hafnium, Vanadium, Niob, Tantal, Chrom, Molybdän und Wolfram und X ausgewählt ist aus Bor, Kohlenstoff, Silicium und Stickstoff, und erhältlich ist durch ein Verfahren nach Anspruch 1 und worin die ABX-Komponente variierende Stöchiometrie aufweist, wenn ABX ein Wolfram/Molybdän-Carbid ist.

15. Material nach Anspruch 14, erhältlich durch ein Verfahren nach einem der Ansprüche 2 bis 13.

16. Material nach Anspruch 14, worin das Produkt von 60 bis 95 Gewichtsprozent Wolfram, von 1 bis 40 Gewichtsprozent Molybdän und von 4 bis 9 Gewichtsprozent Kohlenstoff umfaßt.

17. Material nach Anspruch 16, worin ABX von 77 bis 89 Gewichtsprozent Wolfram, von 5 bis 16 Gewichtsprozent Molybdän und von 5 bis 8 Gewichtsprozent Kohlenstoff umfaßt.

18. Material nach Anspruch 16, umfassend, basierend auf dem Massenzusammensetzungsgewicht, von 65 bis 93 Prozent Wolfram, von 0,9 bis 28 Prozent Molybdän und von 4 bis 8 Prozent Kohlenstoff.

19. Material nach einem der Ansprüche 14 bis 18 mit einer Korngröße von weniger als fünf Mikrometer.

20. Geformter Gegenstand, hergestellt aus einem Material nach einem der Ansprüche 14 bis 19.

## Revendications

1. Procédé de préparation d'un matériau adapté à une utilisation dans la fabrication d'articles manufacturés nécessitant des degrés élevés de dureté ou de résistance à l'usure, ledit procédé consistant à chauffer un mélange en poudre de AX, et une source de B et, éventuellement, de X à une température inférieure aux trois quarts du plus bas des points d'ébullition de AX et de la source de B et sous pression pour provoquer une réaction incomplète dudit mélange avec une croissance minimale des grains et pour fournir un matériau densifié, multiphase, comprenant comme composants principaux au moins un composé AX et au moins un composé ABX, où A et B sont des matériaux différents choisis parmi le titane, le zirconium, l'hafnium, le vanadium, le niobium, le tantale, le chrome, le molybdène et le tungstène et X est choisi parmi le bore, le carbone, le silicium et l'azote et où, lorsque ABX représente le carbure de tungstène/molybdène, le composant ABX est de stoechiométrie variable.

2. Procédé selon la revendication 1, dans lequel ledit matériau est pour l'essentiel entièrement dense.

3. Procédé selon l'une des revendications 1 ou 2, dans lequel la source de B est un composé BX, dans lequel X est tel que défini dans la revendication 1.

4. Procédé selon l'une des revendications précédentes, dans lequel X est le carbone.

5. Procédé selon l'une des revendications précédentes, dans lequel A est choisi parmi le tungstène, l'hafnium et le titane et B est un matériau différent de A choisi parmi le tungstène, le zirconium, le vanadium, le chrome et le molybdène.

6. Procédé selon la revendication 5, dans lequel A est le tungstène, B est le molybdène ou le chrome et X est le carbone.

7. Procédé selon la revendication 6, dans lequel B est le molybdène.

8. Procédé selon l'une des revendications 6 ou 7, dans lequel la source de B est le sous-carbure de molybdène (Mo₂C) ou le carbure de chrome.

9. Procédé selon la revendication 8, dans lequel ledit mélange en poudre comprend du sous-carbure de molybdène, du carbure de tungstène et, éventuellement, du carbone.

10. Procédé selon la revendication 9, dans lequel le mélange en poudre comprend 1 à 30% de sous-carbure de molybdène, par rapport au poids total de sous-carbure de molybdène et de carbure de tungstène.

11. Procédé selon la revendication 10, dans lequel ledit mélange en poudre comprend 3 à 20% en poids de sous-carbure de molybdène, par rapport au poids total de sous-carbure de molybdène et de carbure de tungstène.

12. Procédé selon l'une des revendications précédentes, dans lequel ledit matériau comprend de plus une quantité résiduelle de la source de B.

13. Procédé selon l'une des revendications précédentes, comprenant de plus une étape intermédiaire de conversion du mélange en un article façonné à l'état cru avant la densification.

14. Matériau adapté à une utilisation dans la fabrication d'articles manufacturés nécessitant des degrés élevés de dureté ou de résistance à l'usure, ledit matériau étant densifié, multiphase, et à grains fins; comprenant, comme composants principaux, au moins un composé AX et au moins un composé ABX, où A et B sont des matériaux différents choisis parmi le titane, le zirconium, l'hafnium, le vanadium, le niobium, le tantale, le chrome, le molybdène et le tungstène et X est choisi parmi le bore, le carbone, le silicium et l'azote; et pouvant être obtenu à l'aide d'un procédé tel que défini dans la revendication 1 et dans lequel, lorsque ABX est un carbure de tungstène/molybdène, le composant ABX est de stoechiométrie variable.

15. Matériau selon la revendication 14, pouvant être obtenu à l'aide d'un procédé tel que défini selon l'une des revendications 2 à 13.

16. Matériau selon la revendication 14, dans lequel le produit comprend 60 à 95 pourcent en poids de tungstène, 1 à 40 pourcent en poids de molybdène et 4 à 9 pourcent en poids de carbone.

17. Matériau selon la revendication 16, dans lequel ABX comprend 77 à 89 pourcent en poids de tungstène, 5 à 16 pourcent en poids de molybdène et 5 à 8 pourcent en poids de carbone.

18. Matériau selon la revendication 16 comprenant, par rapport au poids de la composition globale, 65 à 93 pourcent de tungstène, 0,9 à 28 pourcent de molybdène et 4 à 8 pourcent de carbone.

19. Matériau selon l'une des revendications 14 à 18 possédant une taille de grain inférieure à cinq micromètres.

20. Article façonné préparé à partir d'un matériau tel que défini selon l'une des revendications 14 à 19.
